# EUROPÄISCHE PATENTSCHRIFT

(11) **EP 2 382 072 B1**
(45) Veröffentlichungstag und Bekanntmachung des Hinweises auf die Patenterteilung: **08.01.2014**
(21) Anmeldenummer: 09763871.2
(22) Anmeldetag: 30.11.2009
(51) Int. Cl.: B29B 17/02, C22B 7/00, B07B 4/02, B02C 19/00

(54) **VERFAHREN ZUR AUFBEREITUNG EINER TEXTILEN FRAKTION, WELCHE BEI DER AUFBEREITUNG VON ALTREIFEN ERZEUGT WURDE SOWIE ANLAGE ZUR DURCHFÜHRUNG DES VERFAHRENS**
METHOD FOR PROCESSING A TEXTILE FRACTION GENERATED WHEN PROCESSING USED TIRES, AND SYSTEM FOR PERFORMING THE METHOD
PROCÉDÉ DE TRAITEMENT D'UNE FRACTION TEXTILE OBTENUE LORS DU TRAITEMENT DE PNEUS USAGÉS ET INSTALLATION PERMETTANT LA MISE EN OEUVRE DUDIT PROCÉDÉ

(30) Priorität: 23.12.2008 DE 102008063047
(43) Veröffentlichungstag der Anmeldung: 02.11.2011
(73) Patentinhaber: Volkswagen Aktiengesellschaft, 38440 Wolfsburg (DE)
(72) Erfinder: GOLDMANN, Daniel, 38640 Goslar (DE)
(86) Internationale Anmeldenummer: PCT/EP2009/008506
(87) Internationale Veröffentlichungsnummer: WO 2010/072306

(56) Entgegenhaltungen:
- WO-A2-2004/089610
- DE-A1- 10 053 491
- US-A- 4 342 647
- Prof. Dr. Ingo Marini: "Stoffliche Verwertung der Faserfraktion aus dem Altreifenrecycling" 1. November 2007 (2007-11-01), Seiten 1-24, XP002586383 Gefunden im Internet: URL:http://www.tuwien.ac.at/fileadmin/t/tu wien/downloads/Publishing_Texte/Projektbes chreibung_Marini_neu.pdf [gefunden am 2010-06-08]

## Beschreibung

Die Erfindung betrifft ein Verfahren zur Aufbereitung einer textilen Fraktion, welche bei der Aufbereitung von Altreifen erzeugt wurde sowie eine Anlage zur Durchführung des Verfahrens. Die Erfindung betrifft ferner eine Verwendung der erfindungsgemäß aufbereiteten textilen Fraktion als Zusatzstoff zur Behandlung von Schlamm.

Altreifen stellen einen beachtlichen Stoffstrom eines relativ homogenen Abfalltyps dar. Jährlich fallen in Deutschland ca. 511.000 t Reifen als Altreifen aus dem Ersatzgeschäft im Bereich der Werkstattentsorgung bzw. im Ersatzteilhandel an, ca. 9.000 t Altreifen werden importiert und ca. 65.000 t Altreifen kommen aus der Altfahrzeugverwertung hinzu. Somit stehen pro Jahr in Deutschland rund 585.000 t Reifen zur Weiterverwendung, Verwertung oder Beseitigung an.

Ein Großteil der Altreifen wird heutzutage energetisch verwertet. So greift die Zementindustrie schon seit Jahren auf Altreifen als heizwertreichen Sekundärrohstoff für ihre Brennöfen zurück. Dadurch werden jährlich ca. 72.000 t Reifen energetisch verwertet. Der zweitgrößte Verwendungszweck für Altreifen ist die Weiterverwendung z.B. für die Runderneuerung, den Export, den Einsatz in der Landwirtschaft oder in Hafenanlagen. So werden rund 120.000 t im Stoffkreislauf gehalten. In zunehmendem Maße werden Altreifen allerdings auch aufbereitet, um einer weitgehenden stofflichen Verwertung zugeführt zu werden.

Als wesentliche erste Schritte werden bei der Aufbereitung von Altreifen zum Zwecke der Erzeugung von Gummigranulat oder Gummimehl die Hauptbestandteile durch Zerkleinerung zu den Fraktionen Gummi, Stahldraht und Textilrohflusen (Reifen-Rohflusen bzw. textile Fraktion) aufgeschlossen. Diese drei Fraktionen können alsdann durch Sortierung grob voneinander getrennt werden. Für eine Aufbereitung des Gummigranulats zu vermarktbaren Qualitäten auf hohem Niveau existieren bereits ausreichend ausgereifte Prozesse. Die textile- und Stahlfraktion werden dagegen bisher nicht optimal aufbereitet und können infolge nicht optimal verwertet werden. Die Stahldrahtfraktion ist nach dem bisherigen Stand der Aufbereitungsverfahren immer noch mit Gummianhaftungen versehen, die eine metallurgische Verwertung technisch und damit auch wirtschaftlich negativ beeinflussen. Die textile Fraktion wird bislang unter Zuzahlung von Entsorgungsgebühren einer thermische Beseitigung oder einer energetischen Verwertung zugeführt. Verfahren zur Aufbereitung speziell der textilen Fraktion existieren bislang nicht.

Hinzu kommen gewisse rechtliche Vorschriften, die die Hersteller von Fahrzeugreifen bzw. von Kraftfahrzeugen verpflichten, auch die umweltverträgliche Verwertung bzw. Beseitigung ihrer Produkte sicherzustellen. Für den Umgang mit Altreifen aus der Werkstattentsorgung kommen zusätzlich die Verpflichtungen hinzu, die Automobilhersteller in diesem Segment im Rahmen der Gesetzgebung zur Verpackungsverordnung übernommen haben. Für den Umgang mit Altreifen aus der Altfahrzeugverwertung greift des weiteren die Altfahrzeug-Verordnung, in der festgelegt ist, dass die Hersteller von Fahrzeugen Altfahrzeuge und deren Teile zurücknehmen und einer Verwertung zuführen müssen. Ab 2015 müssen mindestens 95 Gewichtsprozente eines Altfahrzeugs einer Wiederverwendung und Verwertung zugeführt und davon wiederum rund 85 Gewichtsprozente einer Wiederverwendung und stofflichen Verwertung zugeführt werden. Bei Altreifen kann der Anteil an Gummi (Kautschuk, Füllstoffe, Sonstiges) auf etwa 60%, der Anteil an Festigkeitsträgern auf etwa 40% (17% Stahldraht, 23% Textil) veranschlagt werden.

In der DE 103 57 968 A1 sind eine Recyclinganlage und ein Verfahren zur Aufbereitung (Kaltzerkleinerung) von Gummierzeugnissen und Stahl-Gummi-Verbunden, wie beispielsweise Kraftfahrzeug-Altreifen, beschrieben. Das Aufbereitungsgut wird dabei zunächst vorzerkleinert, in einer nachgeschalteten Kühlzone verspröded, in einem Zwischenzerkleinerer weiter zerkleinert und das zerkleinerte und portionierte Aufbereitungsgut mittels eines Nachzerkleinerers zermahlen und zerrissen. Der Stahl und das Gummi werden mittels eines Rütteltisches mit angeschlossenem Magnetabscheider freigelegt und selektiert. Die nach den Zerkleinerungsprozessen freigelegten textilen Verstärkungseinlagen sollen mittels einer als Windsichtung ausgebildeten Trenneinrichtung dem zerkleinerten Aufbereitungsgut entnommen werden, wobei die Trenneinrichtung bevorzugt als Gebläse ausgebildet sein soll. Die abgeschiedenen textilen Verstärkungseinlagen werden anschließend in einer Textilfördereinrichtung einer Konfektionierung zugeführt.

Aus der DE 30 39 870 ist ein Verfahren zum Trennen von Gummi und Metall bei Altreifen bekannt, welches wirtschaftlich durchführbar das Metall und Gummi so vollständig voneinander trennen soll, dass diese wiederverwendbar sind. Dabei wird der Altreifen zunächst zerkleinert und das Metall in dem zerkleinerten Reifen mit einem elektromagnetischen Hochfrequenzfeld erwärmt, wodurch die auf dem Metall aufliegende Grenzschicht des Gummis thermisch zersetzt und dann das Metall vom Gummi abgetrennt werden kann.

Ferner ist in dem Artikel "Stoffliche Verwertung der Faserfraktion aus dem Altreifenrecycling" von Prof. Dr. Ingo Marini aus dem Jahr 2007 (auffindbar im Internet unter http://www.tuwien.ac.at/fileadmin/t/tuwien/downloads/Publishing Texte/Projektbeschreibung M arini.pdf) ein Projekt beschrieben, in dem es darum ging, den beim Reifenrecycling anfallenden textilen Reststoff (Flusenfraktion) einer sinnvollen Verwendung zuzuführen. Dabei wurden unterschiedliche Aufbereitungsmöglichkeiten für die Flusenfraktion aufgezeigt, unter anderem eine Sichtung durch einen Abweiseradsichter, bei der eine Trennung der Flusenfraktion in Einzelfasern und Störstoffe (i.w. Gummi, Stahl und Zwirnreste) erfolgte.

Die DE 100 53 491 A1 offenbart ein Verfahren und eine Anlage zur Aufbereitung von Shredder-Rückständen insbesondere von Fahrzeugkarossen. Dabei liegen die Shredder-Rückstände in einer Shredder-Leichtfraktion und einer nicht-ferromagnetischen Shredder-Schwerfraktion vor. Durch Abscheidung einer ferromagnetischen Fraktion, einer Nichteisen-Metall-haltigen Fraktion, einer Granulatfraktion sowie einer Sandfraktion in Vorprozessen und einem Hauptprozess wird daraus zunächst eine Rohflusen-Fraktion erzeugt. Die Rohflusen-Fraktion wird anschließend durch einen Veredelungsprozess (Metallverkugelung, Entstaubung und Dichtetrennung) in eine metallhaltige Staubfraktion, eine Metallfraktion sowie eine metallarme Flusen-Fraktion aufgetrennt, welche qualitativ hochwertig und rohstofflich oder energetisch verwertbar ist.

Schließlich beschreibt die WO 2004/089610 A2 ein Verfahren zur Verwertung von technischen Gummiprodukten, wie z.B. Altreifen, Förderbändern und dergleichen. Es erfolgt eine Bearbeitung in den Schritten Zerkleinern, Granulieren und Kaltzerkleinern, wobei jeweils nichtmetallische Armierungen durch Mahlen und/oder Schneiden abgesondert werden. Dadurch wird ein rieselfähiges Produkt erhalten, welches wirtschaftlich verwertbar, insbesondere bituminösen Baustoffen zumischbar ist.

Der Erfindung liegt die Aufgabe zu Grunde, ein Verfahren zur Aufbereitung einer textilen Fraktion, welche bei der Aufbereitung von Altreifen erzeugt wurde, bereitzustellen, welches eine wirksame Abtrennung zumindest eines Großteils der nicht textilen Bestandteile (Gummi und insbesondere Stahldraht) ermöglicht.

Diese Aufgabe wird mit Anspruch 1 gelöst. Vorteilhafte Ausführungsformen beziehungsweise Weiterbildungen der Erfindung sind den jeweiligen Unteransprüchen entnehmbar.

Erfindungsgemäß ist vorgesehen, dass das Verfahren zur Aufbereitung einer textilen Fraktion, welche bei der Aufbereitung von Altreifen erzeugt wurde, folgenden Verfahrensschritte aufweist:
- Auflockerung der textilen Fraktion,
- Dichtetrennung der aufgelockerten Fraktion durch Schwerkraft und Luftstrom in eine Schwergutfraktion und eine Leichtgutfraktion,
- Abtrennung von metallischen Bestandteilen aus der im Luftstrom befindlichen Leichtgutfraktion,
- Abscheidung der metallreduzierten Leichtgutfraktion aus dem Luftstrom

Durch die Kombination dieser Verfahrensschritte ist eine derart wirksame Abtrennung eines Großteils der nicht textilen Bestandteile (Gummi und insbesondere Stahldrähte) von der textilen Fraktion und somit die Herstellung einer "veredelten" textilen Fraktion möglich, dass diese nicht entsorgt werden muss, sondern einer stofflichen Verwertung zugeführt werden kann. Dabei ist die vorgeschaltete Auflockerung der textilen Fraktion eine Grundvoraussetzung dafür, dass auch der darauf folgende Verfahrensschritt der Dichtetrennung effizient durchgeführt werden kann. Es hat sich nämlich gezeigt, dass die aufgelockerte textile Fraktion vorzüglich durch einen Luftstrom in eine Schwergut- und eine Leichtgutfraktion getrennt werden kann und dass eine Abtrennung von metallischen Bestandteilen aus der Leichtgutfraktion wirksam durchgeführt werden kann, wenn sich die Leichtgutfraktion in einem Luftstrom befindet. Durch Abscheidung der metallreduzierten Leichtgutfraktion aus dem Luftstrom erhält man schließlich eine veredelte textile Fraktion, die vorzüglich einer weiteren Verwendung zugeführt werden kann.
Unter "textiler Fraktion", welche dem erfindungsgemäßen Verfahren zur Aufbereitung zugeführt wird, ist in Zusammenhang mit dieser Erfindung eine aus einer vorgeschalteten Reifenaufbereitung stammende, flusenartige Fraktion (Reifen-Rohflusen) zu verstehen, welche überwiegend aus Textilfasern, ferner aus Gummi und aus Stahldrähten besteht. Die Einzelkomponenten sind zum Teil stark miteinander verklumpt, verfilzt oder verhakt und lassen sich zum Teil nur sehr schwer voneinander trennen, wenn sie am Ende der bisher üblichen Prozessführung in Auffangbehältern abgeschieden worden sind. Selbst bei einer direkten Zuführung der Rohflusen zum Veredelungsprozess ohne vorgeschaltete Abscheidung und Zwischenlagerung ist von einer nicht ausreichenden Auflockerung für die nachgeschaltete Verdelung auszugehen, da der vorlaufende Reifenrecycling-Prozess anderen Anforderungen genügen muss.

Gemäß einer ersten Weiterbildung der Erfindung ist vorgesehen, dass die Auflockerung über eine Prallbehandlung erfolgt. Es zeigt sich, dass bei der Prallbehandlung eine starke Auflockerung des Aufbereitungsgutes erzielt werden kann, die zumindest eine teilweise Separation nach der Dichte zulässt.

Da die Auflockerung aber nach erfolgter Prallbehandlung relativ schnell rückläufig ist, erweist es sich als sehr vorteilhaft, wenn die Leichtgutfraktion bei der Dichtetrennung im Schwerkraftfeld abgesaugt wird, also quasi ein auf die Leichtgutfraktion "ziehend" wirkender Luftstrom eingestellt wird. Ein "drückender" Luftstrom würde eher dazu neigen, die aufgelockerte Leichtgutfraktion wieder zusammen zu drücken und damit kontraproduktiv wirken. Sehr zweckmäßig ist dabei, wenn die Absaugung in etwa senkrecht zum Schwerkraftfeld erfolgt.

Es zeigt sich dabei ferner als sehr vorteilhaft, wenn die Absauggeschwindigkeit des Luftstroms regelbar ist. Zweckmäßig wurde dabei die Absauggeschwindigkeit des Luftstroms in einer Versuchsanlage auf einen Wert zwischen etwa 10 m/s und 30 m/s, vorzugsweise auf etwa 20 m/s eingestellt. Diese Werte können in einer großtechnischen Anlage aber durchaus auch anders ausfallen.

Eine weitere, höchst vorteilhafte Ausbildung des Erfindungsgedankens sieht vor, dass die Abtrennung der metallischen Bestandteile aus der im Luftstrom befindlichen Leichtgutfraktion durch Magnetscheidung erfolgt. Durch diese Maßnahme können gute Trennergebnisse erzielt werden, denn es hatte sich in Versuchen gezeigt, dass die metallischen Bestandteile ausnahmslos ferromagnetisch waren.

Vorteilhafter Weise sollte die Magnetkraft dabei im wesentlichen quer zum Luftstrom wirken.

Überdies kann eine weitere zweckmäßige Ausgestaltung der Erfindung vorsehen, dass die Magnetkraft wenigstens über einen Großteil der Länge des Luftstroms oder sogar im Wesentlichen über die gesamte Länge des Luftstroms wirkt. Es zeigte sich in Versuchen, das durch diese Maßnahmen mitgerissene mittelgroße Drähte effizient abgeschieden werden konnten.

Zur Abtrennung besonders langer Drähte ist es sehr zweckmäßig, wenn eine weitere magnetische Abtrennung solcher metallischen Bestandteile aus der im Luftstrom befindlichen Leichtgutfraktion erfolgt, wobei die Magnetkraft im Wesentlichen parallel zum Luftstrom wirkt. Hierbei ist in vorteilhafter Weise vorzusehen, dass die Magnetkraft im wesentlichen über den gesamten Querschnitt des Luftstroms wirkt.

Es kann ferner vorgesehen sein, nach der Abscheidung der metallreduzierten Leichtgutfraktion aus dem Luftstrom eine weitere Zerkleinerung (Nachzerkleinerung) der metallreduzierten Leichtgutfraktion durchzuführen. Dies kann beispielsweise zur Verbesserung des Einmischverhaltens der veredelten textilen Fraktion (Reifen-Flusen) in Klärschlamm führen, wenn die Reifen-Flusen als Entwässerungsmittel für Klärschlamm eingesetzt werden sollten.

Zur weiteren Erhöhung der Qualität erwies es sich als äußerst vorteilhaft, das erfindungsgemäße Verfahren zweistufig durchzuführen, das heißt die aufbereitete textile Fraktion einer erneuten Behandlung der Verfahrensschritte des erfindungsgemäßen Verfahrens zu unterziehen. Hierbei konnte eine besonders hohe Abscheidung von Gummi- und Drahtbestandteilen aus der textilen Fraktion festgestellt werden ohne das Ausbringen des Flusen-Anteils in die veredelte Flusenfraktion zu stark abzusenken. Hierbei ist anzumerken, dass die zweite Behandlungsstufe weder zwangsläufig zeitlich unmittelbar an die erste Behandlungsstufe angrenzen, noch örtlich mit dieser zusammenfallen muss. Die aufbereitete textile Fraktion bzw. die Reifen-Flusen sind jedoch unmittelbar nach Abscheidung aus dem Luftstrom stark aufgelockert und nehmen daher ein sehr großes Volumen ein. Nach einiger Zeit verdichten sich die Reifen-Flusen jedoch wieder. Eine durch Lagern und/oder Transport erzeugte erneute Verdichtung kann aber beispielsweise die Einmischung in Klärschlamm erheblich erschweren. Von daher sollte eine Weiterverarbeitung der aufbereiteten textilen Fraktion möglichst direkt nach der Aufbereitung geschehen, um die aufbereitete textile Fraktion nicht noch einmal auflockern zu müssen. Es bietet sich daher in solchen Fällen an, die Durchführung der zweiten Aufbereitungsstufe zeitlich und örtlich unmittelbar vor die Weiterverarbeitung (beispielsweise vor die Zuführung zum Anmaischbehälter in einer Klärschlamm-Konditionierung) zu schalten. Nach der ersten Bearbeitungsstufe empfiehlt es sich möglicherweise, die aufbereitete textile Fraktion transportoptimal zu verdichten und zum "Abnehmer" zu transportieren, der die aufbereitete textile Fraktion vor Ort erst unmittelbar vor einer Weiterverwendung in der zweiten Verfahrensstufe weiter aufbereitet.

Der Erfindung liegt auch die Aufgabe zu Grunde, eine geeignete Anlage zur Durchführung des Verfahrens bereitzustellen.

Diese Aufgabe wird mit Anspruch 15 gelöst. Vorteilhafte Ausführungen beziehungsweise Weiterbildungen der Erfindung sind den jeweiligen Unteransprüchen entnehmbar.

Erfindungsgemäß weist die Anlage Mittel auf, die folgende Verfahrensschritte ermöglichen:
- Auflockerung der textilen Fraktion,
- Dichtetrennung der aufgelockerten Fraktion durch Schwerkraft und Luftstrom in eine Schwergutfraktion und eine Leichtgutfraktion,
- Abtrennung von metallischen Bestandteilen aus der im Luftstrom befindlichen Leichtgutfraktion,
- Abscheidung der metallreduzierten Leichtgutfraktion aus dem Luftstrom

Dabei ist als Mittel zur Auflockerung wenigstens eine Prallmühle vorzusehen. Prallmühlen sind ausgereifte Aggregate und es hat sich gezeigt, dass bei der Prallbehandlung eine starke Auflockerung des Gutes zu erreichen war. Dabei kann ein besonders guter Abscheidegrad für Drähte erzielt werden, wenn die Prallmühle mehrere, gegenüber feststehenden Prallplatten rotierende Prallleisten aufweist, wobei wenigstens eine erste Prallplatte und eine zweite Prallplatte vorgesehen sind und in Drehrichtung der Prallmühle (bzw. Prallleisten) gesehen der Abstand der Prallleisten zu den Prallplatten abnimmt.

Als Mittel zur Dichtetrennung sollte wenigstens ein kanalartiger Abschnitt vorgesehen sein, der in etwa horizontal (und damit in etwa senkrecht zur Schwerkraft liegend) angeordnet und vorzugsweise rohrförmig ausgebildet sein sollte. Der kanalartige Abschnitt sollte zweckmäßigerweise an den vertikalen Fallschacht im Austrag der Prallmühle oberhalb des Schwergutaustrags angeschlossen sein. Das Leichtgut kann so leichter in den kanalartigen Abschnitt gelangen und vom Schwergut getrennt werden. Diese Maßnahmen tragen überdies dazu bei, die Anlage als weitgehend geschlossenes System auszubilden, was eine Regelung des Luftstrom bzw. der Absauggeschwindigkeit im kanalartigen Abschnitt erleichtert.

Zur Abtrennung von metallischen Bestandteilen aus der im Luftstrom befindlichen Leichtgutfraktion hat es sich als sehr vorteilhaft erwiesen, wenigstens einen Magneten, insbesondere Permanentmagneten vorzusehen. Der Magnet kann zweckmäßigerweise derart im kanalartigen Abschnitt angeordnet sein, dass seine Magnetkraft im Wesentlichen quer zum Luftstrom wirkt. Darüber hinaus bringt es weitere Vorteile, wenn der Magnet sich im wesentlichen über einen Großteil der Länge des kanalartigen Abschnitts erstreckt. Zweckmäßigerweise weist der kanalartige Abschnitt wenigstens eine Einbringmöglichkeit für den wenigstens einen Magneten auf, damit dieser zum einen leicht montiert und zum anderen

(kontinuierlich oder diskontinuierlich) leicht von anhaftenden "gefangenen" Drähten befreit werden kann.

Zu Abscheidung besonders langer Drähte kann sehr vorteilhaft sein, im kanalartigen Abschnitt Mittel für eine weitere magnetische Abtrennung von metallischen Bestandteilen aus der im Luftstrom befindlichen Leichtgutfraktion vorzusehen, wobei deren Magnetkraft im wesentlichen parallel zum Luftstrom wirkt. Als vorteilhaftes Mittel hat sich hierbei ein magnetisches Gitter erwiesen. Zweckmäßigerweise sollte sich das magnetische Gitter im Wesentlichen über den gesamten Querschnitt des kanalartigen Abschnitts erstrecken.

Nach der Abscheidung der metallreduzierten Leichtgutfraktion aus dem Luftstrom kann es zweckmäßig sein, Mittel für eine weitere Zerkleinerung (Nachzerkleinerung) der metallreduzierten Leichtgutfraktion vorzusehen. Dies kann beispielsweise das Einmischverhalten der Leichtgutfraktion bzw. der aufbereiteten textilen Fraktion in Klärschlamm begünstigen.

Auch hat es sich als sehr vorteilhaft erwiesen, als Mittel zur Abscheidung der metallreduzierten Leichtgutfraktion aus dem Luftstrom einen Zyklon einzusetzen.

Schließlich liegt der Erfindung noch die Aufgabe zu Grunde, eine Verwendung für die durch das erfindungsgemäße Verfahren bereitgestellte, aufbereitete textile Fraktion aufzuzeigen.
Diese Aufgabe wird mithilfe des Anspruchs 27 gelöst. Vorteilhafte Verwendungen sind den diesbezüglichen Unteransprüchen entnehmbar.

So ist erfindungsgemäß vorgesehen, die erfindungsgemäß aufbereitete textile Fraktion als Zusatzstoff zur Behandlung von Schlamm einzusetzen. In Versuchen hat sich gezeigt, dass sich die aufbereitete textile Fraktion (Reifen-Flusen) hervorragend als Entwässerungshilfsmittel von Schlamm, insbesondere Klärschlamm einsetzen lässt.

Weitere Vorteile und Ausgestaltungen der Erfindung werden anhand eines bevorzugten Ausführungsbeispiels deutlich, was mit Hilfe der beiliegenden Figuren näher erläutert werden soll. Dabei bedeuten
- Fig. 1: ein schematisches Fließdiagramm der nacheinander folgenden Prozessschritte zur Aufbereitung der textilen Fraktion, wobei auch die Möglichkeit eines zweistufigen Prozesses gestrichelt angedeutet ist,
- Fig. 2: ein prinziphaftes Verfahrensfließbild einer Anlage,
- Fig. 3: die Gut- und Luftstromführung in einer Anlage,
- Fig. 4: eine Ansicht der Anlage gemäß Detailansicht IV aus Fig. 3,
- Fig. 5: eine Ansicht der Anlage gemäß Ansicht V aus Fig. 4 und
- Fig. 6: eine prinziphafte Darstellung einer im Verfahren eingesetzten Prallmühle, wobei nur ein Teil dargestellt ist.

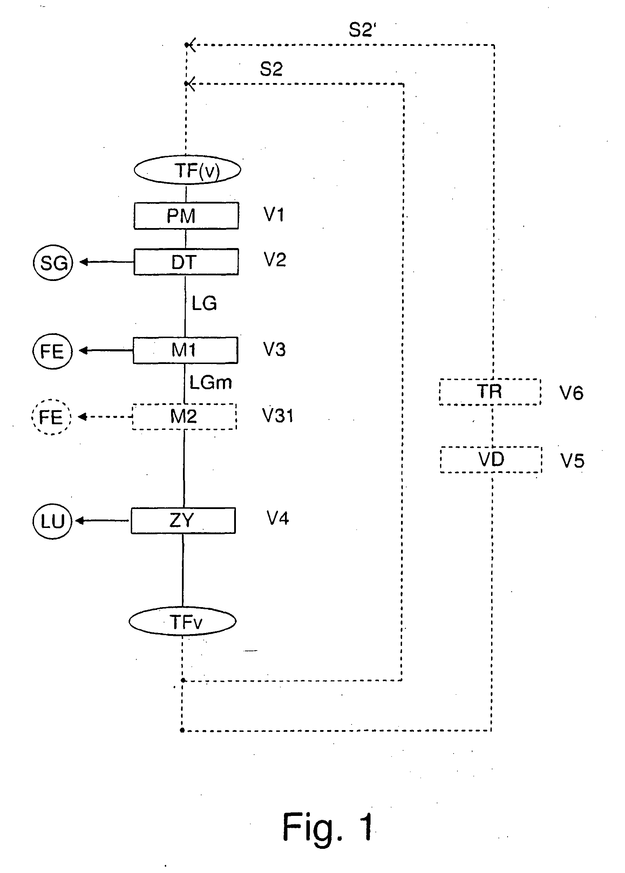

Zunächst wird auf Figur. 1 Bezug genommen. Eine textile Fraktion (Reifen-Rohflusen) TF wird einer Auflockerung V1 in einer Prallmühle PM unterzogen. Die textile Fraktion TF besteht überwiegend aus Textilfasern (ca. 70 Gew.%) und weiterhin aus einem Gummianteil (ca. 29 Gew.%) sowie einem geringen Anteil aus magnetischen Stahldrähten (ca. 0,05 Gew.%), wobei die Textilfasern einen Großteil des Volumens der Textilfraktion einnehmen. Die einzelnen Komponenten sind zum Teil stark miteinander verklumpt, verfilzt oder verhakt und lassen sich zum Teil nur sehr schwer voneinander trennen. Die Stahldrähte sind überwiegend mit Längen zwischen ca. 1 mm bis ca. 40 mm und Durchmessern von 0,2 bis 0,45 mm vertreten. Insbesondere die langen Drähte in der textilen Fraktion TF sind in die Textilfasern zum Teil extrem verhakt. Durch die Prallbehandlung V1 kann eine starke Auflockerung der textilen Fraktion TF erreicht werden, wodurch anschließend zumindest eine teilweise Separation nach der Dichte erst möglich ist bzw. stark begünstigt wird. An die Prallbehandlung V1 schließt sich eine Dichtetrennung V2 im Schwerkraftfeld mit vorzugsweise in etwa senkrecht dazu stehendem Luftstrom an, wobei bereits ein Großteil der Drähte zusammen mit dem Gummi als Schwergutfraktion SG abgeschieden wird. Einige Drähte können jedoch noch nicht abgeschieden werden und gelangen zusammen mit den Textilfasern in eine Leichtgutfraktion LG. Die Leichtgutfraktion LG wird anschließend einer magnetischen Abtrennung V3 von ferromagnetischen Bestandteilen FE (i.w. Drähte) mittels eines Magnetabscheiders M1 unterzogen und in eine metallreduzierte Leichtgutfraktion LGm überführt. An die magnetische Abtrennung V3 kann sich (optional) eine weitere magnetische Abtrennung V31 mit einem Magnetabscheider M2 anschließen. Als abschließender Verfahrensschritt findet eine Abscheidung V4 der durch die vorangegangenen Verfahrensschritte V1 bis V3 (bzw. V31) erzeugten, metallreduzierten Leichtgutfraktion LGm aus dem Luftstrom LU mittels eines Zyklons ZY statt, wobei das abgeschiedene Gut gleichzeitig eine veredelte, textile Fraktion TFv darstellt. Das oben beschriebene Verfahren stellt eine erste, grundlegende Stufe für die Veredelung der textilen Fraktion TF dar. Optional kann jedoch vorgesehen sein, die bereits veredelte textile Fraktion TFv den Verfahrensschritten V1 bis V4 in einer zweiten Stufe S2 (gestrichelt dargestellt) erneut zuzuführen. Hierdurch ist eine weitere Reduzierung des Drahtanteils in der textilen Fraktion TFv und damit eine abermalige Erhöhung der Qualität möglich. Es sei darauf hingewiesen, dass die erste und die (optionale) zweite Verfahrenstufe S2 nicht zwangsläufig zeitlich und örtlich dicht beieinander liegen bzw. zusammenfallen müssen. Eine zweite Verfahrensstufe S2' kann auch an einem ganz anderen Ort durchgeführt werden. Die durch die erste Verfahrensstufe sehr stark aufgelockerten Textilfasern nehmen jedoch ein sehr großes Volumen ein und neigen dazu, sich nach einiger Zeit wieder zu verdichten. Daher sollte die zweite Verfahrensstufe S2 bzw. S2' möglichst zeitlich erst unmittelbar vor einer weiteren Aufbereitung (beispielsweise Zuführung zu einem Anmaischbehälter in einer Klärschlamm-Konditionierung) erfolgen. Sollte bei der zweiten Verfahrensstufe S2' ein Transport V6 notwendig sein, so ist zu empfehlen, die aufbereitete textile Fraktion TFv zunächst mittels einem geeigneten Verdichtungsmittel VD einer transportoptimalen Verdichtung V5 zu unterziehen, bevor diese mit einem geeigneten Transportmittel TR zum Bestimmungsort des Abnehmers gebracht wird.

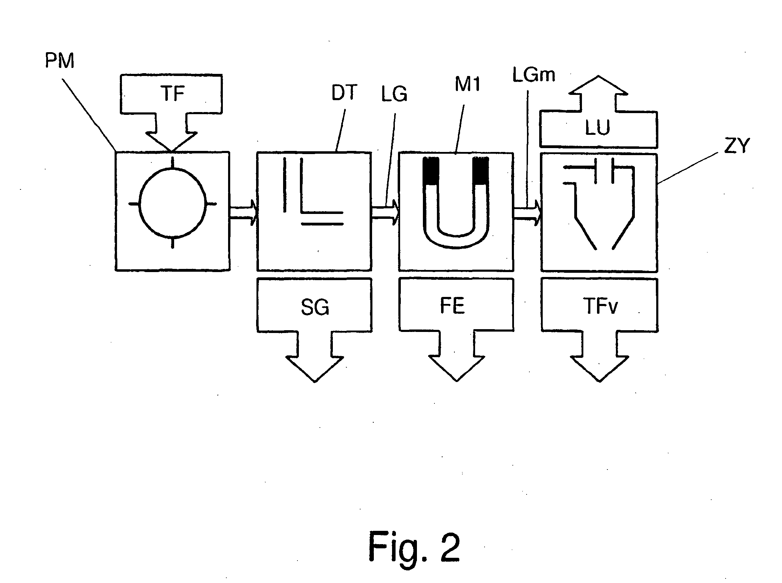

In Fig. 2 ist ein prinziphaftes Verfahrensfließbild ersichtlich, woraus die wesentlichen Materialströme hervorgehen. Zunächst wird die textile Fraktion TF der Prallmühle PM zugeführt und anschließend der Dichtetrenneinrichtung DT, wobei in der Dichtetrenneinrichtung DT die Schwergutfraktion SG bereits abgeschieden wird. Die verbleibende Leichtgutfraktion LG wird mittels des Magnetabscheiders M1 einer Abtrennung der ferromagnetischen Bestandteile FE unterzogen und die so metallreduzierte Leichtgutfraktion LGm im Zyklon ZY von einem Luftstrom LU als veredelte textile Fraktion TFv abgeschieden.

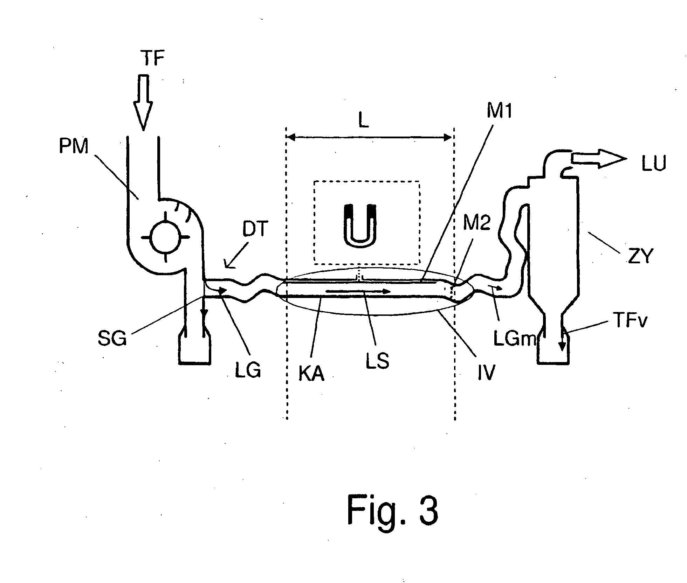

Die Fig. 3 zeigt nunmehr eine konkrete Luft- und Gutführung in einer Anlage. Die Anlage ist im Wesentlichen als geschlossenes System aufgebaut und weist als erstes Aggregat die Prallmühle PM auf, bei der die textile Fraktion TF (Reifen-Rohflusen) von oben eingebracht wird. Im unmittelbaren Bereich des Austrags der Prallmühle PM, und zwar an ihrem vertikalen Fallschacht oberhalb des Schwergutaustrags, befindet sich die Dichtetrenneinrichtung DT, wobei bei der Dichtetrennung die Schwergutfraktion SG nach unten fällt und die Leichtgutfraktion LG in einen in etwa waagerecht ausgerichteten, kanalartigen Abschnitt KA hineingesaugt wird. Diese Absaugung wird durch ein Gebläse (nicht gezeigt) erzeugt, welches dem Zyklon ZY nachgeschaltet ist und einen Luftstrom LU erzeugt. Der Zyklon ZY ist im Wesentlichen luftdicht mit dem kanalartigen Abschnitt KA bzw. dem Rest der Anlage verbunden. Die Regelung der Absaugung kann über die Einstellung der Absaugung am Zyklon mit Hilfe einer nicht näher dargestellten Einstellvorrichtung, beispielsweise eines Klappenventils erfolgen. Als vorteilhaft hat sich hierbei in der verwendeten Versuchsanlage ein Luftstrom im Bereich von 10 m/s bis 30 m/s, insbesondere 20 m/s erwiesen. Durch die Absaugung der Leichtgutfraktion LG wirkt ein "ziehender" Luftstrom LS auf die Leichtgutfraktion LG und es besteht nicht die Gefahr, dass das aufgrund der Prallbehandlung V1 gut aufgelockerte Aufbereitungsgut bzw. die Leichtgutfraktion LG im kanalartigen Abschnitt KA wieder komprimiert wird, wie dies bei einem "drückenden" Luftstrom der Fall wäre. Der kanalartige Abschnitt KA weist eine Länge L auf. Anhand von Fig. 3 ist ersichtlich, dass im kanalartigen Abschnitt KA der erste Magnetabscheider M1 angeordnet ist. Der Magnetabscheider M1 ist ein Permanentmagnet (was in der Figur durch ein u-förmiges Magnetsymbol lediglich angedeutet ist), länglich ausgebildet und erstreckt sich in seiner Länge in etwa über die gesamte Länge L des kanalartigen Abschnitts KA. Der kanalartige Abschnitt KA weist eine nicht näher dargestellte Einbringmöglichkeit für den Magneten M1 auf. Der Magnet M1 kann beispielsweise entweder über eine Klappe in den Kanal KA eingebracht werden (für eine diskontinuierliche Entladung bzw. Befreiung von anhaftenden "gefangenen" Drähten bei geringen Drahtmengen) oder über eingekoppelte bewegliche Magnete (Trommel- oder Bandmagnete) für eine kontinuierlich getaktete Entladung (bei höheren Drahtgehalten) ausgebildet werden. Etwa am Ende des kanalartigen Abschnitts KA kann ein zweiter Magnetabscheider M2 angeordnet sein, welcher ebenfalls ein Permanentmagnet ist. Da hier grundsätzlich nur noch geringe Mengen an Restdrähten auftreten, sind eine diskontinuierliche Entladung und ebenso entsprechende, nicht näher dargestellte Mittel dafür vorzusehen. Nach der Metallabtrennung durch die Magnetabscheider M1 und M2 gelangt die metallreduzierte Leichtgutfraktion LGm über einen Kanal weiter hin zum Zyklon ZY und wird dort als veredelte textile Fraktion TFv vom Luftstrom LU abgeschieden.

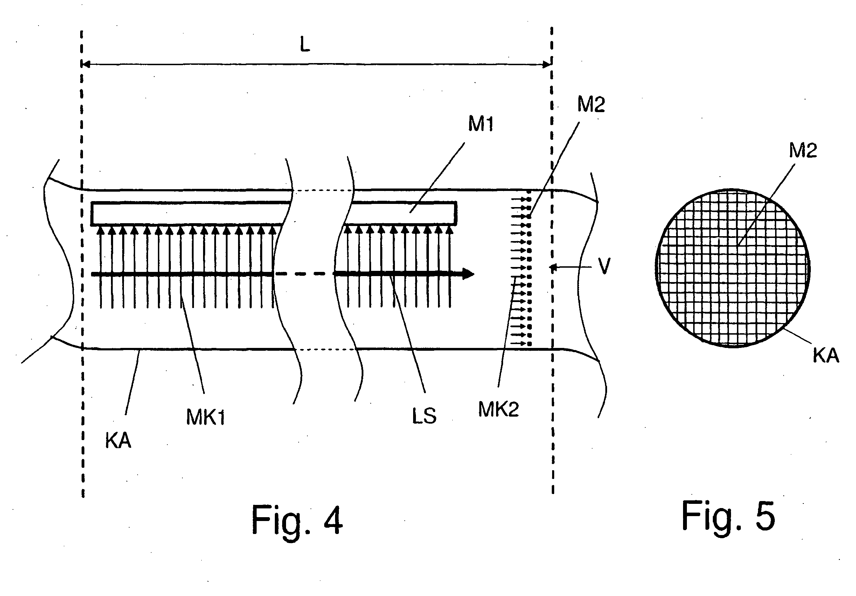

In Fig. 4, welche eine Detailansicht aus Fig. 3 zeigt, ist ersichtlich, dass der erste Magnetabscheider M1 hinsichtlich seiner Längserstreckung in etwa parallel zum Luftstrom LS angeordnet ist mit einer Magnetkraft MK1, die im Wesentlichen quer zum Luftstrom LS wirkt. Auf diese Weise strömt die Leichtgutfraktion LG am Permanentmagneten M1 vorbei und es kann so eine effiziente Abscheidung von in der Leichtgutfraktion LG mitgerissenen Drähten erreicht werden. Der hinter dem ersten Magnetabscheider M1 angeordnete zweite Magnetabscheider M2 weist eine Magnetkraft MK2 auf, welche in etwa parallel zum Luftstrom LS wirkt. Aus Fig. 5 wird dabei deutlich, dass der zweite Magnetabscheider M2 gitterförmig ausgebildet ist und sich über den gesamten kreisförmigen Querschnitt des kanalartigen Abschnitts KA erstreckt. Die Magnetkraft MK2 wirkt also folglicherweise auch über den gesamten Querschnitt des Luftstroms LS.

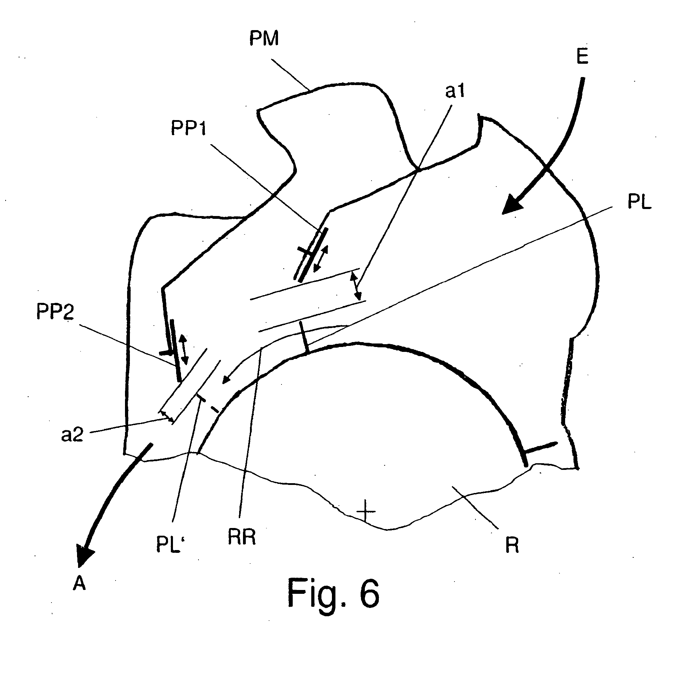

In Fig. 6 sind vorteilhafte Details der Prallmühle PM dargestellt. Die Prallmühle PM weist einen Eintrag E und einen Austrag A für das aufzubereitende Gut auf. Des Weiteren ist ein an sich bekannter Rotor R mit mehreren Prallleisten PL vorgesehen. Der Rotor R dreht sich im Ausführungsbeispiel entgegen dem Uhrzeigersinn und bewegt die Prallleisten PL in Richtung auf am Gehäuse der Prallmühle PM verschiebbar gehaltene Prallplatten PP1 und PP2. Die Prallplatten PP1 und PP2 sind dabei derart positioniert, dass sich ein erster radialer Abstand a1 einer Prallleiste PL zur ersten Prallplatte PP1 und nach einer Rotation einer Prallleiste PL in Rotationsrichtung RR des Rotors R (Position PL') ein zweiter radialer Abstand a2 zur zweiten Prallplatte PP2 ergibt. Dabei ist der Abstand a1 größer als der Abstand a2. Diese Verkleinerung des Abstandes führt zu einer Kombination von primärer Auflockerung und sekundärer Scherung des Aufbereitungsgutes und es können so sehr gute Ergebnisse hinsichtlich Auflockerung und primärer Abscheidung von Drähten aus dem Aufbereitungsgut erzielt werden.

Abschließend sei angemerkt, dass die textile Fraktion TF (Reifen-Rohflusen) bzw. insbesondere die aufbereitete, veredelte textile Fraktion TFv (Reifen-Flusen) ausgezeichnet als Behandlungs- bzw. Entwässerungshilfsmittel von Schlamm, insbesondere Klärschlamm genutzt werden können. Bei der aufbereiteten, veredelten textile Fraktion TFv sind nämlich Störstoffe, die den Behandlungsprozess von Klärschlamm stören könnten, weitestgehend eliminiert. Als physikalische Störstoffe sind hier die Drähte zu nennen, die Schutzsiebe der Pumpen zur Förderung des Klärschlamms zusetzen bzw. Anlagenkomponenten der Klärschlammaufbereitung beschädigen könnten. Aber auch potentielle chemische Störstoffe wie Zink und Schwefel lassen sich durch die erfindungsgemäße Aufbereitung vermindern.

### Bezugszeichenliste

- a1: Abstand der ersten Prallplatte zu den Prallleisten
- a2: Abstand der zweiten Prallplatte zu den Prallleisten
- A: Austrag aus der Prallmühle
- KA: kanalartiger Abschnitt
- DT: Dichtetrenneinrichtung
- E: Eintrag in die Prallmühle
- FE: abgeschiedene, ferromagnetische Bestandteile (Drähte)
- L: Länge des kanalartigen Abschnitts
- LS: Luftstrom im kanalartigen Abschnitt
- LU: vom Stoffstrom getrennter Luftstrom
- LG: Leichtgutfraktion
- LGm: metallreduzierte Leichtgutfraktion
- M1: erster Magnetabscheider
- M2: zweiter optionaler Magnetabscheider (Magnetgitter)
- MK1: Wirkungsrichtung der Magnetkraft des ersten Magnetabscheiders
- MK2: Wirkungsrichtung der Magnetkraft des zweiten Magnetabscheiders
- PM: Prallmühle
- PL: Prallleisten
- PP1: verschiebbare erste Prallplatte
- PP2: verschiebbare zweite Prallplatte
- R: Rotor der Prallmühle
- RR: Rotationsrichtung des Rotors
- SG: Schwergutfraktion
- S2: optionales zweistufiges Verfahren (1. und 2. Stufe fallen örtlich zusammen)
- S2': optionales zweistufiges Verfahren (1. und 2. Stufe fallen örtlich auseinander)
- TF: textile Fraktion (Reifen-Rohflusen)
- TFv: aufbereitete (veredelte) textile Fraktion (Reifen-Flusen)
- TR: Transportmittel
- VD: Verdichtungsmittel
- V1: Auflockerung bzw. Prallbehandlung
- V2: Dichtetrennung von Leichtgut und Schwergut
- V3: magnetische Abtrennung von ferromagnetischen Bestandteilen
- V31: optionale weitere magnetische Abtrennung von ferromagnetischen Bestandteilen
- V4: Abscheidung der aufbereiteten textilen Fraktion aus dem Luftstrom
- V5: optionale transportoptimale Verdichtung der aufbereiteten textilen Fraktion
- V6: optionaler Transport der aufbereiteten textilen Fraktion zur zweiten Verfahrensstufe
- ZY: Zyklon

## Patentansprüche

1. Verfahren zur Aufbereitung einer textilen Fraktion (TF), welche bei der Aufbereitung von Altreifen erzeugt wurde, mit folgenden Verfahrensschritten:
- Auflockerung (V1) der textilen Fraktion (TF),
- Dichtetrennung (V2) der aufgelockerten textilen Fraktion (TF) durch Schwerkraft und Luftstrom (LU) in eine Schwergutfraktion (SG) und eine Leichtgutfraktion (LG),
- Abtrennung (V3) von metallischen Bestandteilen (FE) aus der im Luftstrom (LS) befindlichen Leichtgutfraktion (LG),
- Abscheidung (V4) einer metallreduzierten Leichtgutfraktion (LGm) aus dem Luftstrom (LU)

2. Verfahren zur Aufbereitung einer textilen Fraktion (TF) nach Anspruch 1, **dadurch gekennzeichnet, dass** die Auflockerung (V1) über eine Prallbehandlung erfolgt.

3. Verfahren zur Aufbereitung einer textilen Fraktion (TF) nach Anspruch 1 oder 2, **dadurch gekennzeichnet, dass** bei der Dichtetrennung im Schwerkraftfeld (V2) die Leichtgutfraktion (LG) abgesaugt wird.

4. Verfahren zur Aufbereitung einer textilen Fraktion (TF) nach wenigstens einem der vorhergehenden Ansprüche, **dadurch gekennzeichnet, dass** die Absaugung in etwa senkrecht zum Schwerkraftfeld erfolgt.

5. Verfahren zur Aufbereitung einer textilen Fraktion (TF) nach wenigstens einem der vorhergehenden Ansprüche, **dadurch gekennzeichnet, dass** die Absauggeschwindigkeit des Luftstroms (LU bzw. LS) regelbar ist.

6. Verfahren zur Aufbereitung einer textilen Fraktion (TF) nach wenigstens einem der vorhergehenden Ansprüche, **dadurch gekennzeichnet, dass** die Absauggeschwindigkeit des Luftstroms (LU bzw. LS) auf einen Wert zwischen etwa 10 m/s und 30 m/s, vorzugsweise auf etwa 20 m/s eingestellt wird.

7. Verfahren zur Aufbereitung einer textilen Fraktion (TF) nach wenigstens einem der vorhergehenden Ansprüche, **dadurch gekennzeichnet, dass** die Abtrennung der metallischen Bestandteile (FE) aus der im Luftstrom (LS) befindlichen Leichtgutfraktion (LG) durch Magnetscheidung (M1 bzw. MK1) erfolgt.

8. Verfahren zur Aufbereitung einer textilen Fraktion (TF) nach wenigstens einem der vorhergehenden Ansprüche, **dadurch gekennzeichnet, dass** die Magnetkraft (MK1) im Wesentlichen quer zum Luftstrom (LS) wirkt.

9. Verfahren zur Aufbereitung einer textilen Fraktion (TF) nach wenigstens einem der vorhergehenden Ansprüche, **dadurch gekennzeichnet, dass** die Magnetkraft (MK1) wenigstens über einen Großteil der Länge (L) des Luftstroms (LS) wirkt.

10. Verfahren zur Aufbereitung einer textilen Fraktion (TF) nach wenigstens einem der vorhergehenden Ansprüche, **dadurch gekennzeichnet, dass** die Magnetkraft (MK1) im Wesentlichen über die gesamte Länge (L) des Luftstroms (LS) wirkt.

11. Verfahren zur Aufbereitung einer textilen Fraktion (TF) nach wenigstens einem der vorhergehenden Ansprüche, **dadurch gekennzeichnet, dass** eine weitere magnetische Abtrennung (M2 bzw. MK2) von metallischen Bestandteilen (FE) aus der im Luftstrom (LS) befindlichen Leichtgutfraktion (LG) erfolgt, wobei die Magnetkraft (MK2) im wesentlichen parallel zum Luftstrom (LS) wirkt.

12. Verfahren zur Aufbereitung einer textilen Fraktion (TF) nach wenigstens einem der vorhergehenden Ansprüche, **dadurch gekennzeichnet, dass** die Magnetkraft (MK2) im Wesentlichen über den gesamten Querschnitt des Luftstroms (LS) wirkt.

13. Verfahren zur Aufbereitung einer textilen Fraktion (TF) nach wenigstens einem der vorhergehenden Ansprüche, **dadurch gekennzeichnet, dass** nach der Abscheidung (V4) der metallreduzierten Leichtgutfraktion (LGm bzw. TFv) aus dem Luftstrom (LU) eine weitere Zerkleinerung der metallreduzierten Leichtgutfraktion (LGm bzw. TFv) erfolgt.

14. Verfahren zur Aufbereitung einer textilen Fraktion (TF) nach wenigstens einem der vorhergehenden Ansprüche, **dadurch gekennzeichnet, dass** die aufbereitete textile Fraktion (TFv) einer erneuten Behandlung gemäß wenigstens einem der vorhergehenden Ansprüche unterzogen wird.

15. Anlage zur Aufbereitung einer textilen Fraktion (TF), welche bei der Aufbereitung von Altreifen erzeugt wurde, wobei Mittel (PM, DT, M1, M2, ZY) vorgesehen sind, die folgende Verfahrensschritte ermöglichen:
- Auflockerung (V1) der textilen Fraktion (TF),
- Dichtetrennung (V2) der aufgelockerten textilen Fraktion (TF) durch Schwerkraft und Luftstrom (LU) in eine Schwergutfraktion (SG) und eine Leichtgutfraktion (LG),
- Abscheidung (V4) einer metallreduzierten Leichtgutfraktion (LGm) aus dem Luftstrom (LU), **dadurch gekennzeichnet, daß** Mittel vorgesehen sind zur
- Abtrennung (V3) von metallischen Bestandteilen (FE) aus der im Luftstrom (LS) befindlichen Leichtgutfraktion (LG), und
wobei als Mittel zur Auflockerung (V1) wenigstens eine Prallmühle (PM) vorgesehen ist, die gegenüber feststehenden Prallplatten (PP1, PP2) rotierende Prallleisten (PL) aufweist, wobei wenigstens eine erste Prallplatte (PP1) und eine zweite Prallplatte (PP2) vorgesehen sind und in Drehrichtung (RR) der Prallmühle (PM) gesehen der Abstand (a1 bzw. a2) der Prallleisten (PL) zu den Prallplatten (PP1, PP2) abnimmt.

16. Anlage zur Aufbereitung einer textilen Fraktion (TF) nach Anspruch 15, **dadurch gekennzeichnet, dass** als Mittel zur Dichtetrennung (V2) wenigstens ein kanalartiger Abschnitt (KA) vorgesehen ist, der in etwa horizontal ausgerichtet und vorzugsweise an einen vertikalen Fallschacht der Prallmühle (PM) oberhalb des Schwergutaustrags angeschlossen ist..

17. Anlage zur Aufbereitung einer textilen Fraktion (TF) nach wenigstens einem der Ansprüche 15 bis 16, **dadurch gekennzeichnet, dass** der Abschnitt (KA) rohrförmig ausgebildet ist.

18. Anlage zur Aufbereitung einer textilen Fraktion (TF) nach wenigstens einem der Ansprüche 15 bis 17, **dadurch gekennzeichnet, dass** als Mittel zur Abtrennung (V3) von metallischen Bestandteilen (FE) aus der im Luftstrom (LS) befindlichen Leichtgutfraktion (LG) wenigstens ein Magnet (M1, M2), insbesondere Permanentmagnet vorgesehen ist.

19. Anlage zur Aufbereitung einer textilen Fraktion (TF) nach wenigstens einem der Ansprüche 15 bis 18 **dadurch gekennzeichnet, dass** der Magnet (M1) derart im Abschnitt (KA) angeordnet ist, dass seine Magnetkraft (MK1) im Wesentlichen quer zum Luftstrom (LS) wirkt.

20. Anlage zur Aufbereitung einer textilen Fraktion (TF) nach wenigstens einem der Ansprüche 15 bis 19, **dadurch gekennzeichnet, dass** der Magnet (M1) sich im Wesentlichen über einen Großteil der Länge (L) des Abschnitts (KA) erstreckt.

21. Anlage zur Aufbereitung einer textilen Fraktion (TF) nach wenigstens einem der Ansprüche 15 bis 20, **dadurch gekennzeichnet; dass** der Abschnitt (KA) wenigstens eine Einbringmöglichkeit für den wenigstens einen Magneten (M1, M2) aufweist.

22. Anlage zur Aufbereitung einer textilen Fraktion (TF) nach wenigstens einem der Ansprüche 15 bis 21, **dadurch gekennzeichnet, dass** im Abschnitt (KA) Mittel (M2) für eine weitere magnetische Abtrennung (V31) von metallischen Bestandteilen (FE) aus der im Luftstrom (LS) befindlichen Leichtgutfraktion (LGm) vorgesehen sind, wobei deren Magnetkraft (MK2) im wesentlichen parallel zum Luftstrom (LS) wirkt.

23. Anlage zur Aufbereitung einer textilen Fraktion (TF) nach wenigstens einem der Ansprüche 15 bis 22, **dadurch gekennzeichnet, dass** die Mittel (M2) als wenigstens ein magnetisches Gitter ausgebildet sind.

24. Anlage zur Aufbereitung einer textilen Fraktion (TF) nach wenigstens einem der Ansprüche 15 bis 23, **dadurch gekennzeichnet, dass** das magnetische Gitter (M2) sich im Wesentlichen über den gesamten Querschnitt des Abschnitts (KA) erstreckt.

25. Anlage zur Aufbereitung einer textilen Fraktion (TF) nach wenigstens einem der Ansprüche 15 bis 24, **dadurch gekennzeichnet, dass** nach der Abscheidung (V4) der metallreduzierten Leichtgutfraktion (LGm bzw. TFv) aus dem Luftstrom (LU) Mittel für eine weitere Zerkleinerung der metallreduzierten Leichtgutfraktion (LGm bzw. TFv) vorgesehen sind.

26. Anlage zur Aufbereitung einer textilen Fraktion (TF) nach wenigstens einem der Ansprüche 15 bis 25, **dadurch gekennzeichnet, dass** die Mittel zur Abscheidung (V4) der metallreduzierten Leichtgutfraktion (LGm bzw. TFv) aus dem Luftstrom (LU) als Zyklon (ZY) ausgebildet sind.

## Claims

1. Method for processing a textile fraction (TF) generated when processing used tyres, comprising the following method steps:
- loosening (V1) of the textile fraction (TF),
- density separation (V2)' of the loosened textile fraction (TF) by gravitational force and an air stream (LU) into a heavy material fraction (SG) and a light material fraction (LG),
- separation (V3) of metallic components (FE) from the light material fraction (LG) in the air stream (LS),
- separation (V4) of a metal-reduced light material fraction (LGm) from the air stream (LU).

2. Method for processing a textile fraction (TF) according to Claim 1, **characterized in that** the loosening (V1) is performed by way of an impact treatment.

3. Method for processing a textile fraction (TF) according to Claim 1 or 2, **characterized in that** the density separation in the gravitational force field (V2) involves extracting the light material fraction (LG) by suction.

4. Method for processing a textile fraction (TF) according to at least one of the preceding claims, **characterized in that** the suction extraction is performed approximately perpendicularly to the gravitational force field.

5. Method for processing a textile fraction (TF) according to at least one of the preceding claims, **characterized in that** the extraction rate of the air stream (LU or LS) is controllable.

6. Method for processing a textile fraction (TF) according to at least one of the preceding claims, **characterized in that** the extraction rate of the air stream (LU or LS) is set to a value between approximately 10 m/s and 30 m/s, preferably to approximately 20 m/s.

7. Method for processing a textile fraction (TF) according to at least one of the preceding claims, **characterized in that** the separation of the metallic components (FE) from the light material fraction (LG) in the air stream (LS) is performed by magnetic separation (M1 or MK1).

8. Method for processing a textile fraction (TF) according to at least one of the preceding claims, **characterized in that** the magnetic force (MK1) acts substantially transversely to the air stream (LS).

9. Method for processing a textile fraction (TF) according to at least one of the preceding claims, **characterized in that** the magnetic force (MK1) acts at least over a large part of the length (L) of the air stream (LS).

10. Method for processing a textile fraction (TF) according to at least one of the preceding claims, **characterized in that** the magnetic force (MK1) acts substantially over the entire length (L) of the air stream (LS).

11. Method for processing a textile fraction (TF) according to at least one of the preceding claims, **characterized in that** a further magnetic separation (M2 or MK2) of metallic components (FE) from the light material fraction (LG) in the air stream (LS) is performed, the magnetic force (MK2) acting substantially parallel to the air stream (LS).

12. Method for processing a textile fraction (TF) according to at least one of the preceding claims, **characterized in that** the magnetic force (MK2) acts substantially over the entire cross section of the air stream (LS).

13. Method for processing a textile fraction (TF) according to at least one of the preceding claims, **characterized in that**, after the separation (V4) of the metal-reduced light material fraction (LGm or TFv) from the air stream (LU), a further comminution of the metal-reduced light material fraction (LGm or TFv) is performed.

14. Method for processing a textile fraction (TF) according to at least one of the preceding claims, **characterized in that** the processed textile fraction (TFv) is subjected to a renewed treatment according to at least one of the preceding claims.

15. System for processing a textile fraction (TF) generated when processing used tyres, means (PM, DT, M1, M2, ZY) that make the following method steps possible being provided:
- loosening (V1) of the textile fraction (TF),
- density separation (V2) of the loosened textile fraction (TF) by gravitational force and an air stream (LU) into a heavy material fraction (SG) and a light material fraction (LG),
- separation (V4) of a metal-reduced light material fraction (LGm) from the air stream (LU),
**characterized in that** means for the separation (V3) of metallic components (FE) from the light material fraction (LG) in the air stream (LS) are provided, and
**in that** at least one impact mill (PM) that has impact bars (PL) rotating with respect to stationary impact plates (PP1, PP2) is provided as means for loosening (V1), at least a first impact plate (PP1) and a second impact plate (PP2) being .provided and the distance (a1 or a2) of the impact bars (PL) from the impact plates (PP1, PP2) decreasing, as seen in the direction of rotation (RR) of the impact mill (PM).

16. System for processing a textile fraction (TF) according to Claim 15, **characterized in that** at least one channel-like section (KA) that is aligned approximately horizontally and is preferably connected to a vertical drop chute of the impact mill (PM) above the heavy material discharge is provided as means for density separation (V2).

17. System for processing a textile fraction (TF) according to at least one of Claims 15 and 16, **characterized in that** the section (KA) is of a tubular form.

18. System for processing a textile fraction (TF) according to at least one of Claims 15 to 17, **characterized in that** at least one magnet (M1, M2), in particular a permanent magnet, is provided as means for the separation (V3) of metallic components (FE) from the light material fraction (LG) in the air stream (LS).

19. System for processing a textile fraction (TF) according to at least one of Claims 15 to 18, **characterized in that** the magnet (M1) is arranged in the section (KA) in such a way that its magnetic force (MK1) acts substantially transversely to the air stream (LS).

20. System for processing a textile fraction (TF) according to at least one of Claims 15 to 19, **characterized in that** the magnet (M1) extends substantially over a large part of the length (L) of the section (KA).

21. System for processing a textile fraction (TF) according to at least one of Claims 15 to 20, **characterized in that** the section (KA) has at least one insertion possibility for the at least one magnet (M1, M2).

22. System for processing a textile fraction (TF) according to at least one of Claims 15 to 21, **characterized in that** means (M2) for a further magnetic separation (V31) of metallic components (FE) from the light material fraction (LGm) in the air stream (LS) are provided in the section (KA), the magnetic force (MK2) of said means acting substantially parallel to the air stream (LS).

23. System for processing a textile fraction (TF) according to at least one of Claims 15 to 22, **characterized in that** the means (M2) are formed as at least one magnetic grating.

24. System for processing a textile fraction (TF) according to at least one of Claims 15 to 23, **characterized in that** the magnetic grating (M2) extends substantially over the entire cross section of the section (KA).

25. System for processing a textile fraction (TF) according to at least one of Claims 15 to 24, **characterized in that** means for a further comminution of the metal-reduced light material fraction (LGm or TFv) are provided downstream of the separation (V4) of the metal-reduced light material fraction (LGm or TFv) from the air stream (LU).

26. System for processing a textile fraction (TF) according to at least one of Claims 15 to 25, **characterized in that** the means for the,separation (V4) of the metal-reduced light material fraction (LGm or TFv) from the air stream (LU) are formed as a cyclone (ZY).

## Revendications

1. Procédé de traitement d'une fraction textile (TF) qui a été formée lors du traitement de pneus usagés, le procédé présentant les étapes suivantes :
ameublissement (V1) de la fraction textile (TF),
séparation gravitaire (V2) de la fraction textile (TF) ameublie, par action de la gravité et d'un écoulement d'air (LU), en une fraction (SG) de produit lourd et d'une fraction (LG) de produit léger,
séparation (V3) des composants métalliques (FE) de la fraction (LG) de produit léger présente dans l'écoulement d'air (LS) et
séparation (V4) d'une fraction (LGm) de produit léger à teneur métallique réduite hors de l'écoulement d'air (LU).

2. Procédé de traitement d'une fraction textile (TF) selon la revendication 1, **caractérisé en ce que** l'ameublissement (V1) s'effectue par traitement de percussion.

3. Procédé de traitement d'une fraction textile (TF) selon les revendications 1 ou 2, **caractérisé en ce que** dans la séparation gravitaire, la fraction (LG) de produit léger est aspirée dans le champ de la gravité (V2).

4. Procédé de traitement d'une fraction textile (TF) selon au moins l'une des revendications précédentes, **caractérisé en ce que** l'aspiration s'effectue sensiblement perpendiculairement à la direction du champ de la gravité.

5. Procédé de traitement d'une fraction textile (TF) selon au moins l'une des revendications précédentes, **caractérisé en ce que** la vitesse d'aspiration de l'écoulement d'air (LU ou LS) est réglable.

6. Procédé de traitement d'une fraction textile (TF) selon au moins l'une des revendications précédentes, **caractérisé en ce que** la vitesse d'aspiration de l'écoulement d'air (LU ou LS) est ajustée à une valeur comprise entre environ 10 m/s et 30 m/s et de préférence à environ 20 m/s.

7. Procédé de traitement d'une fraction textile (TF) selon au moins l'une des revendications précédentes, **caractérisé en ce que** la séparation des composants métalliques (FE) hors de la fraction (LG) de produit léger présente dans l'écoulement d'air (LS) s'effectue par séparation magnétique (M1 ou MK1).

8. Procédé de traitement d'une fraction textile (TF) selon au moins l'une des revendications précédentes, **caractérisé en ce que** la force magnétique (MK1) agit essentiellement transversalement par rapport à l'écoulement d'air (LS).

9. Procédé de traitement d'une fraction textile (TF) selon au moins l'une des revendications précédentes, **caractérisé en ce que** la force magnétique (MK1) agit au moins sur la plus grande partie de la longueur (L) de l'écoulement d'air (LS).

10. Procédé de traitement d'une fraction textile (TF) selon au moins l'une des revendications précédentes, **caractérisé en ce que** la force magnétique (MK1) agit essentiellement sur toute la longueur (L) de l'écoulement d'air (LS).

11. Procédé de traitement d'une fraction textile (TF) selon au moins l'une des revendications précédentes, **caractérisé en ce qu'**une autre séparation magnétique (M2 ou MK2) des composants métalliques (FE) hors de la fraction (LG) de produit léger présente dans l'écoulement d'air (LS) a lieu, la force magnétique (MK2) agissant essentiellement parallèlement à l'écoulement d'air (LS).

12. Procédé de traitement d'une fraction textile (TF) selon au moins l'une des revendications précédentes, **caractérisé en ce que** la force magnétique (MK2) agit essentiellement sur toute la section transversale de l'écoulement d'air (LS).

13. Procédé de traitement d'une fraction textile (TF) selon au moins l'une des revendications précédentes, **caractérisé en ce qu'**après la séparation (V4) de la fraction (LGm ou. TFv) de produit léger à teneur en métaux réduite hors de l'écoulement d'air (LU), un déchiquetage supplémentaire de la fraction (LGm ou TFv) de produit léger à teneur réduite en métaux a lieu.

14. Procédé de traitement d'une fraction textile (TF) selon au moins l'une des revendications précédentes, **caractérisé en.ce que** la fraction textile (TFv) traitée subit un nouveau traitement selon au moins l'une des revendications précédentes.

15. Installation de traitement d'une fraction textile (TF) qui a été formée par le traitement de pneus usagés, l'installation présentant des moyens (PM, DT, M1, M2, ZY) qui permettent de réaliser les étapes de traitement suivantes :
ameublissement (V1) de la fraction textile (TF),
séparation gravitaire (V2) de la fraction textile (TF) ameublie, par action de la gravité et d'un écoulement d'air (LU), en une fraction (SG) de produit lourd et d'une fraction (LG) de produit léger,
séparation (V4) d'une fraction (LGm) de produit léger à teneur métallique réduite hors de l'écoulement d'air (LU),
**caractérisée en ce que**
des moyens sont prévus pour la séparation (V3) des composants métalliques (FE) de la fraction (LG) de produit léger présente dans l'écoulement d'air (LS), et
**en ce que** comme moyen d'ameublissement (V1), au moins un broyeur à percussion (PM) est prévu et présente des lattes de percussion (PL) qui tournent par rapport à des plaques de percussion (PP1, PP2) fixes, au moins une première plaque de percussion (PP1) et une deuxième plaque de percussion (PP2) étant prévues et la distance (a1 ou a2) entre les lattes de percussion (PL) et les plaques de percussion (PP1, PP2) diminuant dans le sens de rotation (RR) du broyeur à percussion (PM).

16. Installation de traitement d'une fraction textile (TF) selon la revendication 15, **caractérisé en ce qu'**elle présente comme moyen de séparation gravitaire (V2) au moins une partie (KA) en forme de canal orientée sensiblement à l'horizontale et raccordée de préférence à un puits de chute verticale du broyeur à percussion (PM) au-dessus de la sortie de produit lourd.

17. Installation de traitement d'une fraction textile (TF) selon au moins l'une des revendications 15 à 16, **caractérisée en ce que** la partie (KA) a une configuration tubulaire.

18. Installation de traitement d'une fraction textile (TF) selon au moins l'une des revendications 15 à 17, **caractérisée en ce qu'**elle présente comme moyen de séparation (V3) des composants métalliques (FE) hors de la fraction (LG) de produit léger présente dans l'écoulement d'air (LS) au moins un aimant (M1, M2) et en particulier des aimants permanents.

19. Installation de traitement d'une fraction textile (TF) selon au moins l'une des revendications 15 à 18, **caractérisée en ce que** l'aimant (M1) est disposé dans la partie (KA) de telle sorte que sa force magnétique (MK1) agisse essentiellement transversalement par rapport à l'écoulement d'air (LS).

20. Installation de traitement d'une fraction textile (TF) selon au moins l'une des revendications 15 à 19, **caractérisé en ce que** l'aimant (M1) s'étend essentiellement sur la plus grande partie de la longueur (L) de la partie (KA).

21. Installation de traitement d'une fraction textile (TF) selon au moins l'une des revendications 15 à 20, **caractérisée en ce que** la partie (KA) présente au moins une possibilité d'installation du ou des aimants (M1, M2).

22. Installation de traitement d'une fraction textile (TF) selon au moins l'une des revendications 15 à 21, **caractérisée en ce que** des moyens (M2) permettant une séparation magnétique supplémentaire (V31) des composants métalliques (FE) hors de la fraction (LGm) de produit léger présente dans l'écoulement d'air (LS) sont prévus dans la partie (KA) et **en ce que** leur force magnétique (MK2) agit essentiellement parallèlement à l'écoulement d'air (LS).

23. Installation de traitement d'une fraction textile (TF) selon au moins l'une des revendications 15 à 22, **caractérisée en ce que** les moyens (M2) sont configurés comme une ou plusieurs grilles magnétiques.

24. Installation de traitement d'une fraction textile (TF) selon au moins l'une des revendications 15 à 23, **caractérisée en ce que** la grille magnétique (M2) s'étend essentiellement sur toute la section transversale de la partie (KA).

25. Installation de traitement d'une fraction textile (TF) selon au moins l'une des revendications 15 à 24, **caractérisée en ce qu'**après la séparation (V4) de la fraction (LGm ou TFv) de produit léger à teneur métallique réduite.hors de l'écoulement d'air (LU) des moyens permettant un nouveau déchiquetage de la fraction (LGm ou TFv) de produit léger à teneur métallique réduite sont prévus.

26. Installation de traitement d'une fraction textile (TF) selon au moins l'une des revendications 15 à 25, **caractérisée en ce que** les moyens (V4) de séparation de la fraction (LGm ou TFv) de produit léger à teneur métallique réduite hors de l'écoulement d'air (LU) sont configurés comme cyclone (ZY).
